(19) **Europäisches Patentamt**
**European Patent Office**
**Office européen des brevets**

(11) **EP 4 318 502 A1**

(12) **EUROPEAN PATENT APPLICATION**
published in accordance with Art. 153(4) EPC

(43) Date of publication:
**07.02.2024 Bulletin 2024/06**

(21) Application number: **22780985.2**

(22) Date of filing: **29.03.2022**

(51) International Patent Classification (IPC):
*H01B 1/06* (2006.01)    *H01M 10/0565* (2010.01)
*H01M 10/0567* (2010.01)    *H01M 10/0568* (2010.01)
*H01M 10/0569* (2010.01)

(52) Cooperative Patent Classification (CPC):
**H01B 1/06; H01M 10/0565; H01M 10/0567;
H01M 10/0568; H01M 10/0569;** Y02E 60/10

(86) International application number:
**PCT/JP2022/015666**

(87) International publication number:
**WO 2022/210774 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.03.2021 JP 2021061154**

(71) Applicant: **LINTEC CORPORATION
Itabashi-ku
Tokyo 173-0001 (JP)**

(72) Inventors:
• **HASHIMOTO Sae
Tokyo 173-0001 (JP)**
• **MORIOKA Takashi
Tokyo 173-0001 (JP)**

(74) Representative: **Gille Hrabal
Partnerschaftsgesellschaft mbB
Patentanwälte
Brucknerstraße 20
40593 Düsseldorf (DE)**

(54) **SOLID ELECTROLYTE AND BATTERY**

(57)    A solid electrolyte contains: an electrolyte solution containing a lithium salt and a carbonate solvent; and metal oxide particles. In the solid electrolyte, the lithium salt is at least one selected from lithium-bis(fluorosulfonyl)imide and lithium borofluoride, the carbonate solvent is at least one selected from dimethyl carbonate and propylene carbonate, a molar ratio (lithium salt/carbonate solvent) of the lithium salt to the carbonate solvent is in a range from 1/4 to 1/1, a mass ratio (electrolyte solution/metal oxide particle) of the electrolyte solution to the metal oxide particles is in a range from 72/28 to 93/7, and a specific surface area of the metal oxide particles measured by a BET method is in a range from 160 $m^2/g$ to 700 $m^2/g$.

EP 4 318 502 A1

**Description**

TECHNICAL FIELD

The present invention relates to a solid electrolyte and a battery.

BACKGROUND ART

Unlike an electrolyte solution, a solid electrolyte is in no danger of liquid leakage and is able to form into a lightweight and flexible electrolyte membrane. Accordingly, a use of the solid electrolyte in, for instance, a secondary battery including a lithium ion or the like is expected. For instance, Patent Literature 1 proposes a quasi-solid electrolyte containing a metal oxide and an ionically conductive material and in which a specific ionically conductive material is supported on metal oxide particles.

CITATION LIST

PATENT LITERATURE(S)

Patent Literature 1: JP 2017-059432 A

SUMMARY OF THE INVENTION

PROBLEM(S) TO BE SOLVED BY THE INVENTION

The quasi-solid electrolyte according to Patent Literature 1 includes, as the ionically conductive material, a mixture of one of glymes and N,N-diethyl-N-methyl-N-(2-methoxyethyl)ammonium bis(trifluoromethane sulfonyl)imide and a lithium salt containing lithium-bis(fluorosulfonyl)imide. The ionically conductive material is an electrolyte solution of an ionic liquid system. However, a solid electrolyte including an electrolyte solution of an ionic liquid system is not sufficient in terms of properties such as a lithium ion transport number. Accordingly, it is desired to further improve a solid electrolyte in terms of properties.
An object of the invention is to provide a solid electrolyte having a high transport number of lithium ions, a high ion conductivity, and a high stability to a lithium metal, and a battery including the solid electrolyte.

MEANS FOR SOLVING THE PROBLEM(S)

According to an aspect of the invention, there is provided a solid electrolyte including: an electrolyte solution containing a lithium salt and a carbonate solvent; and metal oxide particles, in which the lithium salt is at least one selected from lithium-bis(fluorosulfonyl)imide and lithium borofluoride, the carbonate solvent is at least one selected from dimethyl carbonate and propylene carbonate, a molar ratio (lithium salt/carbonate solvent) of the lithium salt to the carbonate solvent is in a range from 1/4 to 1/1, a mass ratio (electrolyte solution/metal oxide particles) of the electrolyte solution to the metal oxide particles is in a range from 72/28 to 93/7, and a specific surface area of the metal oxide particles measured by a BET method is in a range from 160 $m^2$/g to 700 $m^2$/g.
It is preferable that the solid electrolyte according to the aspect of the invention further includes a binder.
In the solid electrolyte according to the aspect of the invention, it is preferable that the binder is a resin incompatible with the electrolyte solution.
In the solid electrolyte according to the aspect of the invention, it is preferable that the binder is polytetrafluoroethylene.
In the solid electrolyte according to the aspect of the invention, it is preferable that a content of the binder is in a range from 3 parts by mass to 10 parts by mass with respect to 100 parts by mass of a total mass of the electrolyte solution and the metal oxide particles.
In the solid electrolyte according to the aspect of the invention, it is preferable that the metal oxide particles are silica particles.
In the solid electrolyte according to the aspect of the invention, it is preferable that the silica particles are dry silica particles.
According to another aspect of the invention, a battery including the solid electrolyte according to the above aspect of the invention is provided.
The above aspects of the invention can provide a solid electrolyte having a high transport number of lithium ions, a high ion conductivity, and a high stability to a lithium metal, and a battery including the solid electrolyte.

DESCRIPTION OF EMBODIMENT(S)

Solid Electrolyte

The invention will be described below by taking an exemplary embodiment as an example. The invention is by no means limited to the contents of the exemplary embodiment.

A solid electrolyte according to the exemplary embodiment contains an electrolyte solution and metal oxide particles, the electrolyte solution containing a later-described specific lithium salt and a later-described specific carbonate solvent. Then, a molar ratio between the lithium salt and the solvent and a mass ratio between the electrolyte and the metal oxide are made to fall within respective specific ranges and, further, the metal oxide particles having a specific surface area within a specific range are used, which allows for obtaining a solid electrolyte having a high transport number of lithium ions, a high ion conductivity, and a high stability to a lithium metal. The reason is speculated as follows.

In the solid electrolyte according to the exemplary embodiment, at least one of lithium-bis(fluorosulfonyl)imide (LiFSI) or lithium borofluoride (LiBF4) is used as the lithium salt. Additionally, at least one of dimethyl carbonate or propylene carbonate is used as the carbonate solvent. An electrolyte solution containing a combination among these lithium salts and these carbonate solvents is highly stable to a lithium metal. A metal oxide having the specific surface area within the specific range is contained in the electrolyte solution at the specific mass ratio, which improves thixotropic properties (hereinafter, occasionally referred to as "thixotropy") of the electrolyte solution. A mixture containing the metal oxide and the electrolyte solution is thus able to form into a membrane. By virtue of the membrane being able to be formed, it is possible to reduce impairment of an ion conductivity of the electrolyte solution and reduce leakage of the electrolyte solution. Therefore, it is speculated that a solid electrolyte exhibiting high performances of a transport number of lithium ions, an ion conductivity, and stability to a lithium metal (among these properties, especially, a stability to a lithium metal is high) is obtained according to the exemplary embodiment.

Electrolyte Solution

The electrolyte solution of the exemplary embodiment is obtained by causing the electrolyte solution to contain the specific lithium salt and the specific carbonate solvent at a specific molar ratio.

Lithium Salt

The lithium salt according to the exemplary embodiment is at least one selected from lithium-bis(fluorosulfonyl)imide (LiFSI) and lithium borofluoride (LiBF$_4$). For the lithium salt, one of lithium-bis(fluorosulfonyl)imide or lithium borofluoride may be used alone or two of lithium-bis(fluorosulfonyl)imide and lithium borofluoride may be used in combination. The lithium salt in the solid electrolyte can be present as lithium metal cations and counterions to the cations. The solid electrolyte according to the exemplary embodiment is stable to a lithium metal by virtue of a use of these lithium salts.

Carbonate Solvent

The carbonate solvent according to the exemplary embodiment is at least one selected from dimethyl carbonate (DMC) and propylene carbonate (PC). For the carbonate solvent, one of dimethyl carbonate or propylene carbonate may be used alone or two of dimethyl carbonate and propylene carbonate may be used in combination. Here, the carbonate solvent in the exemplary embodiment refers to a compound having a carbonate skeleton in a molecular structure.

Molar Ratio between Lithium Salt and Carbonate Solvent

In the electrolyte solution according to the exemplary embodiment, the molar ratio (lithium salt/carbonate solvent) of the lithium salt to the carbonate solvent is in a range from 1/4 to 1/1. At the molar ratio of 1/4 or more, the stability to a lithium metal is improved. Meanwhile, at 1/1 or less, the lithium salt becomes easily soluble to the carbonate solvent. The molar ratio may be in a range from 1/3 to 1/1 or in a range from 1/2 to 1/1 in terms of stability to a lithium metal.

The electrolyte solution according to the exemplary embodiment is excellent in stability to a lithium metal by virtue of containing the above-described lithium salt and the above-described carbonate solvent at the above-described molar ratio. In contrast, in a case where a lithium salt other than the above-described lithium salt and a carbonate solvent other than the above-described carbonate solvent are combined, a resultant electrolyte solution exhibits a low stability to a lithium metal although a reason is not specified.

Metal Oxide Particles

The solid electrolyte according to the exemplary embodiment contains the metal oxide particles. In the solid electrolyte according to the exemplary embodiment, containing the electrolyte solution and the metal oxide particles brings the electrolyte solution into a state of being supported on the metal oxide particles. Here, the state of being supported on the metal oxide particles in the exemplary embodiment refers to a state where at least a part of a surface of the metal oxide particles is coated with the electrolyte solution.

A specific surface area of the metal oxide particles measured by a BET method is in a range from 160 $m^2/g$ to 700 $m^2/g$. The specific surface area (the BET method) of 160 $m^2/g$ or more of the metal oxide particles makes the thixotropy likely to be improved and makes a membrane of a mixture (i.e., the solid electrolyte) containing the metal oxide particles and the electrolyte solution easily formable. Meanwhile, the specific surface area (the BET method) of 700 $m^2/g$ or less causes a mixability of the metal oxide particles with the electrolyte solution to be favorable and makes a membrane of the solid electrolyte easily formable. In terms of more easily making the solid electrolyte likely to form into a membrane, the specific surface area (the BET method) of the metal oxide particles is preferably 165 $m^2/g$ or more, more preferably 170 $m^2/g$ or more. In terms of the same, the specific surface area is also preferably 600 $m^2/g$ or less, more preferably 520 $m^2/g$ or less. Here, the BET method is a method including causing solid particles to absorb gas molecules (usually, nitrogen gas) and measuring a specific surface area of the solid particles from an amount of the absorbed gas molecules. A variety of BET measurement devices are usable to measure the specific surface area.

For the metal oxide particles, one of types of metal oxide particles providing the above-described specific surface area may be used alone or two or more types of metal oxide particles different in specific surface area may be used in combination. Examples of the types of metal oxide particles include, without limitation, silica particles, alumina particles, zirconia particles, ceria particles, magnesium silicate particles, calcium silicate particles, zinc oxide particles, antimony oxide particles, indium oxide particles, tin oxide particles, titanium oxide particles, iron oxide particles, magnesium oxide particles, aluminum hydroxide particles, magnesium hydroxide particles, potassium titanate particles, and barium titanate particles. For the metal oxide particles, one of the above types of metal oxide particles may be used alone or two or more of the above types may be used in combination. Among the above, the metal oxide particles are preferably at least one selected from silica particles, alumina particles, zirconia particles, magnesium oxide particles, and barium titanate particles in terms of an improvement in thixotropy. The metal oxide particles are more preferably silica particles in terms of a light weight and a small particle size.

In a case where silica particles are used as the metal oxide particles, the silica particles may be wet silica particles or dry silica particles. Examples of wet silica particles include wet silica particles obtained by a sedimentation method or a sol-gel method obtained through neutralization reaction between sodium silicate and a mineral acid. Meanwhile, examples of dry silica particles include combustion method silica particles (fumed silica particles) obtained by combusting a silane compound and deflagration method silica particles obtained by deflagrating metallic silicon powder. In a case where the silica particles are dry silica particles, mixing of moisture originating from the silica particles is reducible, which facilitates a reduction in deterioration of the electrolyte. Accordingly, in terms of a reduction in deterioration of the electrolyte, the silica particles are preferably dry silica particles, more preferably fumed silica particles.

In terms of making the solid electrolyte likely to form into a membrane, a content of the metal oxide particles in the solid electrolyte is preferably 68 mass% or more with respect to the whole of the solid electrolyte, more preferably 76 mass% or more. In terms of the same, the content is preferably 89 mass% or less, more preferably 86 mass% or less.

Electrolyte Solution, Metal Oxide, and Mass Ratio

In the solid electrolyte according to the exemplary embodiment, a mass ratio (electrolyte solution/metal oxide particles) of the electrolyte solution to the metal oxide particles is in a range from 72/28 to 93/7. At the mass ratio of 72/28 or more, a mass proportion of the metal oxide particles is prevented from becoming extremely high and a membrane of the solid electrolyte is likely to be formed. At the mass ratio of 93/7 or less, the mass proportion of the metal oxide particles is prevented from becoming extremely low, an effect in improving the thixotropy is likely to be enjoyed and a membrane of the solid electrolyte is unlikely to be formed. In terms of more easily making the solid electrolyte likely to form into a membrane, the mass ratio (electrolyte solution/metal oxide particles) is preferably 75/25 or more, more preferably 80/20 or more. In terms of the same, the mass ratio is preferably 92/8 or less, more preferably 90/10 or less.

Binder

The solid electrolyte according to the exemplary embodiment may contain a binder in terms of making a membrane of the solid electrolyte likely to be formed. In a case where the binder is contained, a content of the binder is preferably in a range from 3 parts by mass to 10 parts by mass with respect to 100 parts by mass of the total mass of the electrolyte solution and the metal oxide particles. The content of the binder is preferably 4 parts by mass or more, more preferably 7 parts by mass or less.

The binder according to the exemplary embodiment is not limited. The binder may be a binder compatible with the electrolyte solution or a binder incompatible with the electrolyte solution. In a case where the binder is compatible with the electrolyte solution, an increase in viscosity of the electrolyte solution would be likely to occur, causing the ion conductivity to decrease. In contrast, the incompatibility of the binder with the electrolyte solution reduces an increase in viscosity of the electrolyte solution and, consequently, an influence on a decrease in ion conductivity is reduced. In terms of the above, it is preferable that the binder is incompatible with the electrolyte solution. Specific examples of the binder include fluororesins such as polytetrafluoroethylene (PTFE) and polyvinylidene fluoride (PVDF) and one or two of the above may be used. It is preferable that the binder is polytetrafluoroethylene as a binder incompatible with the electrolyte solution. By virtue of a use of polytetrafluoroethylene, a highly heat-resistant and flexible membrane of the solid electrolyte is likely to be obtained. A membrane of the solid electrolyte including polytetrafluoroethylene as the binder tends to be likely to plastically deform at room temperature.

The solid electrolyte according to the exemplary embodiment contains the above-described lithium salt, carbonate solvent, and metal oxide according to the exemplary embodiment and, if necessary, the binder. The solid electrolyte according to the exemplary embodiment may contain any other component unless an object of the invention is impaired.

A method of manufacturing the solid electrolyte according to the exemplary embodiment may include, without limitation, for instance, a first step of obtaining an electrolyte solution containing the above-described lithium metal salt and the above-described carbonate solvent at the above-described molar ratio and a second step of obtaining a mixture containing the electrolyte solution and metal oxide particles having the above-described specific surface area at the above-described mass ratio. In the second step, a binder may be mixed in the mixture containing the electrolyte solution and the metal oxide particles, if necessary. The mixture containing the electrolyte solution and the metal oxide particles (also containing the binder, if necessary) is then subjected to, for instance, compression molding with a mold having releasing properties. The solid electrolyte according to the exemplary embodiment is to be obtained through such steps.

Form, configuration, and the like of the binder according to the exemplary embodiment are not limited. For instance, a solid electrolyte in a form of a membrane (i.e., a solid electrolyte membrane) is acceptable. It is preferable that the solid electrolyte membrane is self-supported. The self-supported solid electrolyte membrane is excellent in handleability. The self-supported membrane refers to a solid electrolyte membrane releasable from a support and handleable with a shape being maintained. The solid electrolyte membrane is to be obtained by, for instance, applying compression molding to the mixture containing the electrolyte solution and the metal oxide particles with the above-described mold having releasing properties (e.g., a fluororesin-made mold).

Battery

A battery according to the exemplary embodiment includes the solid electrolyte according to the exemplary embodiment. In the exemplary embodiment, it is preferable that the solid electrolyte according to the exemplary embodiment is included as a constituent material of an electrolyte layer of the battery. The battery includes a cathode, an anode, and the electrolyte layer located between the cathode and the anode. Such a configuration makes it possible to obtain a battery excellent in the properties. The battery is preferably a secondary battery, more preferably a lithium ion secondary battery. Various members of the lithium ion secondary battery according to the exemplary embodiment are not limited and, for instance, materials typically usable for a battery are usable.

It should be noted that the invention is not limited to the exemplary embodiment and modifications, improvements, etc. are within the scope of the invention as long as an object of the invention is achievable.

Examples

A further detailed description will be made below on the invention with reference to Examples; however, the invention is by no means limited to these Examples. It should be noted that measurement and evaluations in Examples and Comparatives below were performed by methods below.

Ion Conductivity Measurement of Solid Electrolyte

A solid electrolyte membrane was cut into a 6-mm-diameter circle and sandwiched between electrodes, or two stainless steel plates, and an impedance between the stainless steel plates was measured. For the measurement, an alternating-current impedance method was used, in which an alternating current (an application voltage: 10 mV) was applied to between electrodes and a resistance component was measured. An ion conductivity was calculated from a real impedance intercept of a thus-obtained Cole-Cole plot. It should be noted that a potentiostat/galvanostat (VMP-300 manufactured by BioLogic) was used for the measurement.

The ion conductivity ($\sigma_A$) was obtained by a numerical formula (F1) below.

$$\sigma_A = L_A/(R_A \times S_A) \quad \dots \text{(F1)}$$

In the numerical formula (F1), $\sigma_A$ denotes an ion conductivity (unit: $S \cdot cm^{-1}$), $R_A$ denotes a resistance (unit: $\Omega$), $S_A$ denotes a cross-sectional area (unit: $cm^2$) of a solid electrolyte membrane during measurement, and $L_A$ denotes an interelectrode distance (unit: cm).

A measurement temperature is 25 degrees C. The ion conductivity ($\square_A$) was calculated from a measurement result of a complex impedance.

Ion Conductivity Measurement of Electrolyte Solution

A 19-mm-diameter circular mesh cloth ($\alpha$-UX SCREEN 150-035/380TW, manufactured by NBC Meshtec Inc.) was used as a separator. Then, the separator was impregnated with an electrolyte solution, in which the lithium salt and the carbonate solvent to be used for each of Examples and Comparatives were blended in accordance with a predetermined formulation, and sandwiched between electrodes, or two 16-mm-diameter stainless steel plates. An impedance between the stainless steel plates was measured. For the measurement, an alternating-current impedance method was used, in which an alternating current (an application voltage: 10 mV) was applied to between electrodes and a resistance component was measured. An ion conductivity was calculated from a real impedance intercept of a thus-obtained Cole-Cole plot. It should be noted that a potentiostat/galvanostat (VMP-300 manufactured by BioLogic) was used for the measurement.

The ion conductivity ($\sigma_B$) was obtained by a numerical formula (F2) below.

$$\sigma_B = L_B/(R_B \times S_B) \quad \dots \text{(F2)}$$

In the numerical formula (F2), $\sigma_B$ denotes an ion conductivity (unit: $S \cdot cm^{-1}$), $R_B$ denotes a resistance (unit: $\Omega$), $S_B$ denotes a cross-sectional area of the electrodes (unit: $cm^2$), and $L_B$ denotes an interelectrode distance (unit: cm).

A measurement temperature is 25 degrees C. The ion conductivity ($\sigma_B$) was calculated from a measurement result of a complex impedance.

Evaluation of Stability to Lithium Metal (Dissolution/Precipitation Test)

A solid electrolyte membrane was cut into a 19-mm-diameter circle and sandwiched between electrodes, or two lithium metals, to produce a lithium symmetric cell. A diameter of a lithium metal electrode was 16 mm. At a temperature of 25 degrees C, a current density was set at 3 mA/$cm^2$. After an oxidation current was applied until 3 mAh/$cm^2$ was reached and a reduction current was subsequently applied until 3 mAh/$cm^2$ was reached. This series of operations was repeated for 200 cycles and a change of voltage after the 200 cycles was measured. In accordance with the voltage measurement, a dissolution/precipitation behavior of a lithium metal was examined. When dissolution/precipitation was repeated at a constant voltage without short circuit or the like, stability to a lithium metal is confirmable. Assuming that the number of cycles where activation is performed at a potential within a $\pm30\%$ range from a voltage of an initial cycle was defined as the number of stable activation cycles, respective stabilities of examples to a lithium metal were compared.

Lithium Ion Transport Number Measurement

The obtained solid electrolyte membrane was cut into a 6-mm-diameter circle and sandwiched between electrodes, or two lithium plates, to produce a cell. The cell was then connected to a potentiostat/galvanostat (VMP-300 manufactured by BioLogic) and measurement was started after the elapse of 2 hours or more at 25 degrees C. In the measurement, a complex impedance measurement was first performed and, after a resistance value ($R_0$) was calculated, a direct-current polarization measurement was performed by applying a voltage of 30 mV. A stationary current value ($I_S$) when an initial current value ($I_0$) and a current value became constant was measured. After the stationary current was checked, the complex impedance measurement was again performed and a resistance value ($R_S$) was calculated. A lithium ion transport number ($t+$) was obtained by a numerical formula (F3) below (the Evans formula).

$$t_+ = I_S(\Delta V - I_0 \times R_0)/I_0(\Delta V - I_S \times R_S) \quad \dots \text{(F3)}$$

In the numerical formula (F3), $\Delta V$ denotes an application voltage and $R_0$, Rs, $I_0$, and Is are the same as above.

Example 1

Lithium-bis(fluorosulfonyl)imide (LiFSI) was first prepared as a lithium salt. Dimethyl carbonate (DMC) was prepared as a carbonate solvent. Fumed silica particles (AEROSIL (registered trademark) 380, NIPPON AEROSIL CO., LTD., a specific surface area by the BET method: 350 $m^2$/g-410 $m^2$/g) were prepared as metal oxide particles. Polytetrafluoroethylene (PTFE) was prepared as a binder. It should be noted that a specific surface area 350 $m^2$/g-410 $m^2$/g means the specific surface area is in a range from 350 $m^2$/g to 410 $m^2$/g. The same applies to other similar wording hereinbelow.

Lithium-bis(fluorosulfonyl)imide (LiFSI) and dimethyl carbonate (DMC) were weighed so as to achieve LiFSI/DMC = 1/3 in molar ratio and thoroughly stirred to prepare an electrolyte solution. Next, the electrolyte solution and the fumed silica particles were weighed so as to achieve electrolyte solution/fumed silica particles = 80/20 in mass ratio and thoroughly mixed. Further, polytetrafluoroethylene (PTFE) was added in an amount of 5 parts by mass with respect to 100 parts by mass in total of the electrolyte solution and the fumed silica particles and thoroughly mixed using an agate mortar. The mixture was then subjected to compression molding on a fluororesin mold, thereby obtaining a solid electrolyte membrane.

Example 2

A solid electrolyte membrane was produced in the same manner as in Example 1 except that lithium-bis(fluorosulfonyl)imide (LiFSI) and dimethyl carbonate (DMC) were weighed so as to achieve LiFSI/DMC = 1/2 in molar ratio and thoroughly stirred to prepare an electrolyte solution.

Example 3

A solid electrolyte membrane was produced in the same manner as in Example 1 except that lithium-bis(fluorosulfonyl)imide (LiFSI) and dimethyl carbonate (DMC) were weighed so as to achieve LiFSI/DMC = 1/2 in molar ratio and thoroughly stirred to prepare an electrolyte solution and, further, the electrolyte solution and the fumed silica particles were weighed so as to achieve electrolyte solution/fumed silica particles = 85/15 in mass ratio.

Example 4

A solid electrolyte membrane was produced in the same manner as in Example 1 except that lithium-bis(fluorosulfonyl)imide (LiFSI) and dimethyl carbonate (DMC) were weighed so as to achieve LiFSI/DMC = 1/2 in molar ratio and thoroughly stirred to prepare an electrolyte solution and, further, the electrolyte solution and the fumed silica particles were weighed so as to achieve electrolyte solution/fumed silica particles = 93/7 in mass ratio.

Example 5

Lithium borofluoride ($LiBF_4$) was prepared as a lithium salt.
A solid electrolyte membrane was produced in the same manner as in Example 1 except that lithium borofluoride ($LiBF_4$) and dimethyl carbonate (DMC) were weighed so as to achieve $LiBF_4$/DMC = 1/3 in molar ratio and thoroughly stirred to prepare an electrolyte solution.

Example 6

Lithium borofluoride ($LiBF_4$) was prepared as a lithium salt.
A solid electrolyte membrane was produced in the same manner as in Example 1 except that lithium borofluoride ($LiBF_4$) and dimethyl carbonate (DMC) were weighed so as to achieve $LiBF_4$/DMC = 1/2 in molar ratio and thoroughly stirred to prepare an electrolyte solution.

Example 7

Lithium borofluoride ($LiBF_4$) was prepared as a lithium salt.
A solid electrolyte membrane was produced in the same manner as in Example 1 except that lithium borofluoride ($LiBF_4$) and dimethyl carbonate (DMC) were weighed so as to achieve $LiBF_4$/DMC = 1/2 in molar ratio and thoroughly stirred to prepare an electrolyte solution and, further, the electrolyte solution and the fumed silica particles were weighed so as to achieve electrolyte solution/fumed silica particles = 93/7 in mass ratio.

Example 8

Propylene carbonate (PC) was prepared as a carbonate solvent.
A solid electrolyte membrane was produced in the same manner as in Example 1 except that lithium-bis(fluorosulfonyl)imide (LiFSI) and propylene carbonate (PC) were weighed so as to achieve LiFSI/PC = 1/2 in molar ratio and thoroughly stirred to prepare an electrolyte solution.

Example 9

Fumed silica particles (Airlica F-3, Tokuyama Corporation, a specific surface area by the BET method: 502 $m^2/g$) were prepared as metal oxide particles.
A solid electrolyte membrane was produced in the same manner as in Example 1 except that lithium-bis(fluorosulfonyl)imide (LiFSI) and dimethyl carbonate (DMC) were weighed so as to achieve LiFSI/DMC = 1/2 in molar ratio and thoroughly stirred to prepare an electrolyte solution and, further, the electrolyte solution and the fumed silica particles were weighed so as to achieve electrolyte solution/fumed silica particles = 80/20 in mass ratio.

Example 10

Fumed silica particles (Airlica F-3, Tokuyama Corporation, a specific surface area by the BET method: 502 $m^2/g$) were prepared as metal oxide particles.
A solid electrolyte membrane was produced in the same manner as in Example 1 except that lithium-bis(fluorosulfonyl)imide (LiFSI) and dimethyl carbonate (DMC) were weighed so as to achieve LiFSI/DMC = 1/2 in molar ratio and thoroughly stirred to prepare an electrolyte solution and, further, the electrolyte solution and the fumed silica particles were weighed so as to achieve electrolyte solution/fumed silica particles = 90/10 in mass ratio.

Example 11

Fumed silica particles (AEROSIL (registered trademark) 200, NIPPON AEROSIL CO., LTD., a specific surface area by the BET method: 175 $m^2/g$-225 $m^2/g$) were prepared as metal oxide particles.
A solid electrolyte membrane was produced in the same manner as in Example 1 except that lithium-bis(fluorosulfonyl)imide (LiFSI) and dimethyl carbonate (DMC) were weighed so as to achieve LiFSI/DMC = 1/2 in molar ratio and thoroughly stirred to prepare an electrolyte solution and, further, the electrolyte solution and the fumed silica particles were weighed so as to achieve electrolyte solution/fumed silica particles = 80/20 in mass ratio.

Example 12

Fumed silica particles (AEROSIL (registered trademark) 200, NIPPON AEROSIL CO., LTD., a specific surface area by the BET method: 175 $m^2/g$-225 $m^2/g$) were prepared as metal oxide particles.
A solid electrolyte membrane was produced in the same manner as in Example 1 except that lithium-bis(fluorosulfonyl)imide (LiFSI) and dimethyl carbonate (DMC) were weighed so as to achieve LiFSI/DMC = 1/2 in molar ratio and thoroughly stirred to prepare an electrolyte solution and, further, the electrolyte solution and the fumed silica particles were weighed so as to achieve electrolyte solution/fumed silica particles = 75/25 in mass ratio.

Example 13

Lithium borofluoride ($LiBF_4$) was prepared as a lithium salt. Fumed silica particles (AEROSIL (registered trademark) 200, NIPPON AEROSIL CO., LTD., a specific surface area by the BET method: 175 $m^2/g$-225 $m^2/g$) were prepared as metal oxide particles.
A solid electrolyte membrane was produced in the same manner as in Example 1 except that lithium borofluoride ($LiBF_4$) and dimethyl carbonate (DMC) were weighed so as to achieve $LiBF_4$/DMC = 1/2 in molar ratio and thoroughly stirred to prepare an electrolyte solution and, further, the electrolyte solution and the fumed silica particles were weighed so as to achieve electrolyte solution/fumed silica particles = 75/25 in mass ratio.

Comparative 1

A solid electrolyte membrane was produced in the same manner as in Example 1 except that lithium-bis(fluorosulfonyl)imide (LiFSI) and dimethyl carbonate (DMC) were weighed so as to achieve LiFSI/DMC = 1/12 in molar ratio and thoroughly stirred to prepare an electrolyte solution.

**Comparative 2**

A solid electrolyte membrane was produced in the same manner as in Example 1 except that lithium-bis(fluorosulfonyl)imide (LiFSI) and dimethyl carbonate (DMC) were weighed so as to achieve LiFSI/DMC = 1/6 in molar ratio and thoroughly stirred to prepare an electrolyte solution.

**Comparative 3**

Lithium borofluoride (LiBF$_4$) was prepared as a lithium salt.
A solid electrolyte membrane was produced in the same manner as in Example 1 except that lithium borofluoride (LiBF$_4$) and dimethyl carbonate (DMC) were weighed so as to achieve LiBF$_4$/DMC = 1/12 in molar ratio and thoroughly stirred to prepare an electrolyte solution.

**Comparative 4**

Lithium borofluoride (LiBF$_4$) was prepared as a lithium salt.
A solid electrolyte membrane was produced in the same manner as in Example 1 except that lithium borofluoride (LiBF$_4$) and dimethyl carbonate (DMC) were weighed so as to achieve LiBF$_4$/DMC = 1/6 in molar ratio and thoroughly stirred to prepare an electrolyte solution.

**Comparative 5**

Lithium-bis(trifluoromethane sulfonyl)imide (LiTFSI) was prepared as a lithium salt.
A solid electrolyte membrane was produced in the same manner as in Example 1 except that lithium-bis(trifluoromethanesulfonyl)imide (LiTFSI) and dimethyl carbonate (DMC) were weighed so as to achieve LiTFSI/DMC = 1/2 in molar ratio and thoroughly stirred to prepare an electrolyte solution.

**Comparative 6**

Diethyl carbonate (DEC) was prepared as a carbonate solvent.
A solid electrolyte membrane was produced in the same manner as in Example 1 except that lithium-bis(fluorosulfonyl)imide (LiFSI) and dimethyl carbonate (DEC) were weighed so as to achieve LiFSI/DEC = 1/2 in molar ratio and thoroughly stirred to prepare an electrolyte solution.

**Comparative 7**

Lithium-bis(fluorosulfonyl)imide (LiFSI) and dimethyl carbonate (DMC) were weighed so as to achieve LiFSI/DMC = 1/2 in molar ratio and thoroughly stirred to prepare an electrolyte solution. Next, the electrolyte solution and the fumed silica particles were weighed so as to achieve electrolyte solution/fumed silica particles = 70/30 in mass ratio and thoroughly mixed. Further, polytetrafluoroethylene (PTFE) was added in an amount of 5 parts by mass and thoroughly mixed using an agate mortar. The resulting mixture was compressed on a fluororesin mold but failed to form into a membrane. No solid electrolyte membrane was thus obtained.

**Comparative 8**

Lithium-bis(fluorosulfonyl)imide (LiFSI) and dimethyl carbonate (DMC) were weighed so as to achieve LiFSI/DMC = 1/2 in molar ratio and thoroughly stirred to prepare an electrolyte solution. Next, the electrolyte solution and the fumed silica particles were weighed so as to achieve electrolyte solution/fumed silica particles = 95/5 in mass ratio and thoroughly mixed. Further, polytetrafluoroethylene (PTFE) was added in an amount of 5 parts by mass and thoroughly mixed using an agate mortar. The resulting mixture was compressed on a fluororesin mold but failed to form into a membrane. No solid electrolyte membrane was thus obtained.

**Comparative 9**

Fumed silica particles (AEROSIL (registered trademark) 130, NIPPON AEROSIL CO., LTD., a specific surface area by the BET method: 105 m$^2$/g-155 m$^2$/g) were prepared as metal oxide particles.

Lithium-bis(fluorosulfonyl)imide (LiFSI) and dimethyl carbonate (DMC) were weighed so as to achieve LiFSI/DMC = 1/2 in molar ratio and thoroughly stirred to prepare an electrolyte solution and, further, the electrolyte solution and the fumed silica particles were weighed so as to achieve electrolyte solution/fumed silica particles = 90/10 in mass ratio and thoroughly mixed. Further, polytetrafluoroethylene (PTFE) was added in an amount of 5 parts by mass and thoroughly mixed using an agate mortar. The resulting mixture was compressed on a fluororesin mold but failed to form into a membrane. No solid electrolyte membrane was thus obtained.

Comparative 10

Tetraethylene glycol dimethyl ether (G4) was prepared as a carbonate solvent.

A solid electrolyte membrane was produced as in Example 1 except that the lithium-bis(fluorosulfonyl)imide (LiFSI) and the tetraethylene glycol dimethyl ether (G4) were weighed so as to achieve LiFSI/G4 = 1/1 in molar ratio and thoroughly stirred to prepare an electrolyte solution and, further, the electrolyte solution and the fumed silica particles were weighed so as to achieve electrolyte solution/fumed silica particles = 80/20 in mass ratio.

Evaluation of Solid Electrolyte

For the solid electrolyte membranes obtained in Examples 1 to 13 and Comparatives 1 to 10, the above-described dissolution/precipitation test, ion conductivity measurement, and lithium ion transport number measurement were performed. Additionally, for the electrolyte solution used in each of Examples and Comparatives, the above-described ion conductivity measurement of the electrolyte solution was performed. For Comparatives 7, 8, and 9, in which no solid electrolyte membrane was able to be produced, evaluation of none of the dissolution/precipitation test, the ion conductivity measurement, and the lithium ion transport number measurement was performed. For Comparatives 1 to 6, the lithium ion transport number measurement is not able to be performed due to a deterioration of the electrolyte resulting from a reaction of the solid electrolyte membrane with lithium.

Table 1 shows a composition of the solid electrolyte membrane of each example and Table 2 shows measurement results of the dissolution/precipitation test, the ion conductivity measurement, and the lithium ion transport number measurement. In Table 1, Li Salt denotes a lithium salt and Solvent denotes a carbonate solvent.

Table 1

| | | Solid Electrolyte | | | | | | |
|---|---|---|---|---|---|---|---|---|
| | | Li Salt | Solvent | Li Salt /Solvent | Metal Oxide Particles (Filler) | | Electrolyte Solution /Filler | Binder | |
| | | Type | Type | Mol Ratio | Type | Specific Surface Area m$^2$/g | Mass Ratio | Type | Amount parts by mass |
| | Ex. 1 | LiFSI | DMC | 1/3 | AEROSIL380 | 350-410 | 80/20 | PTFE | 5 |
| | Ex. 2 | LiFSI | DMC | 1/2 | AEROSIL380 | 350-410 | 80/20 | PTFE | 5 |
| | Ex. 3 | LiFSI | DMC | 1/2 | AEROSIL380 | 350-410 | 85/15 | PTFE | 5 |
| | Ex. 4 | LiFSI | DMC | 1/2 | AEROSIL380 | 350-410 | 93/7 | PTFE | 5 |
| | Ex. 5 | LiBF$_4$ | DMC | 1/3 | AEROSIL380 | 350-410 | 80/20 | PTFE | 5 |
| | Ex. 6 | LiBF$_4$ | DMC | 1/2 | AEROSIL380 | 350-410 | 80/20 | PTFE | 5 |
| | Ex. 7 | LiBF$_4$ | DMC | 1/2 | AEROSIL380 | 350-410 | 93/7 | PTFE | 5 |
| | Ex. 8 | LiFSI | PC | 1/2 | AEROSIL380 | 350-410 | 80/20 | PTFE | 5 |
| | Ex. 9 | LiFSI | DMC | 1/2 | AirlicaF-3 | 502 | 80/20 | PTFE | 5 |
| | Ex. 10 | LiFSI | DMC | 1/2 | AirlicaF-3 | 502 | 90/10 | PTFE | 5 |
| | Ex. 11 | LiFSI | DMC | 1/2 | AEROSIL200 | 175-225 | 80/20 | PTFE | 5 |
| | Ex. 12 | LiFSI | DMC | 1/2 | AEROSIL200 | 175-225 | 75/25 | PTFE | 5 |

(continued)

| | | Solid Electrolyte | | | | | | | |
|---|---|---|---|---|---|---|---|---|---|
| | | Li Salt | Solvent | Li Salt /Solvent | Metal Oxide Particles (Filler) | | Electrolyte Solution /Filler | Binder | |
| | | Type | Type | Mol Ratio | Type | Specific Surface Area $m^2/g$ | Mass Ratio | Type | Amount parts by mass |
| | Ex. 13 | $LiBF_4$ | DMC | 1/2 | AEROSIL200 | 175-225 | 75/25 | PTFE | 5 |
| | Comp. 1 | LiFSI | DMC | 1/12 | AEROSIL380 | 350-410 | 80/20 | PTFE | 5 |
| | Comp. 2 | LiFSI | DMC | 1/6 | AEROSIL380 | 350-410 | 80/20 | PTFE | 5 |
| | Comp. 3 | $LiBF_4$ | DMC | 1/12 | AEROSIL380 | 350-410 | 80/20 | PTFE | 5 |
| | Comp. 4 | $LiBF_4$ | DMC | 1/6 | AEROSIL380 | 350-410 | 80/20 | PTFE | 5 |
| | Comp. 5 | LiTFSI | DMC | 1/2 | AEROSIL380 | 350-410 | 80/20 | PTFE | 5 |
| | Comp. 6 | LiFSI | DEC | 1/2 | AEROSIL380 | 350-410 | 80/20 | PTFE | 5 |
| | Comp. 7 | LiFSI | DMC | 1/2 | AEROSIL380 | 350-410 | 70/30 | PTFE | 5 |
| | Comp. 8 | LiFSI | DMC | 1/2 | AEROSIL380 | 350-410 | 95/5 | PTFE | 5 |
| | Comp. 9 | LiFSI | DMC | 1/2 | AEROSIL130 | 105-155 | 90/10 | PTFE | 5 |
| | Comp. 10 | LiFSI | G4 | 1/1 | AEROSIL380 | 350-410 | 80/20 | PTFE | 5 |

Table 2

| | | Evaluation Result | | | |
|---|---|---|---|---|---|
| | | Dissolution /Precipitation Test | Ion Conductivity $\sigma_A$ (at25°C) | Ion Conductivity $\sigma_B$ (at25°C) | Lithium Ion Transport Number |
| | | Number of Cycles | Solid Electrolyte Membrane S/cm | Electrolyte Solution+ Separator S/cm | |
| | Ex. 1 | > 200 | $9.1 \times 10^{-4}$ | $8.2 \times 10^{-4}$ | 0.86 |
| | Ex. 2 | > 200 | $8.2 \times 10^{-4}$ | $7.1 \times 10^{-4}$ | 0.83 |
| | Ex. 3 | > 200 | $6.2 \times 10^{-4}$ | $7.1 \times 10^{4}$ | 0.83 |
| | Ex. 4 | > 200 | $5.5 \times 10^{-4}$ | $7.1 \times 10^{4}$ | 0.83 |
| | Ex. 5 | > 200 | $5.0 \times 10^{-4}$ | $4.3 \times 10^{-4}$ | 0.81 |
| | Ex. 6 | > 200 | $3.5 \times 10^{-4}$ | $2.7 \times 10^{-4}$ | 0.80 |

(continued)

| | Evaluation Result | | | |
| --- | --- | --- | --- | --- |
| | Dissolution /Precipitation Test | Ion Conductivity $\sigma_A$ (at25°C) | Ion Conductivity $\sigma_B$ (at25°C) | Lithium Ion Transport Number |
| | Number of Cycles | Solid Electrolyte Membrane | Electrolyte Solution+ Separator | |
| | | S/cm | S/cm | |
| Ex. 7 | > 200 | $2.5 \times 10^{-4}$ | $2.7 \times 10^{-4}$ | 0.80 |
| Ex. 8 | > 200 | $9.5 \times 10^{-5}$ | $8.7 \times 10^{-5}$ | 0.52 |
| Ex. 9 | > 200 | $1.5 \times 10^{-4}$ | $7.1 \times 10^{4}$ | 0.83 |
| Ex. 10 | > 200 | $3.0 \times 10^{-4}$ | $7.1 \times 10^{4}$ | 0.83 |
| Ex. 11 | > 200 | $3.1 \times 10^{-4}$ | $7.1 \times 10^{4}$ | 0.83 |
| Ex. 12 | > 200 | $3.4 \times 10^{-4}$ | $7.1 \times 10^{4}$ | 0.83 |
| Ex. 13 | > 200 | $9.0 \times 10^{-5}$ | $2.7 \times 10^{-4}$ | 0.80 |
| Comp. 1 | 8 | $4.9 \times 10^{-4}$ | $5.7 \times 10^{-4}$ | unmeasurable |
| Comp. 2 | 6 | $6.5 \times 10^{-4}$ | $7.1 \times 10^{4}$ | unmeasurable |
| Comp. 3 | 10 | $1.0 \times 10^{-4}$ | $1.9 \times 10^{-4}$ | unmeasurable |
| Comp. 4 | 10 | $3.3 \times 10^{-4}$ | $4.0 \times 10^{-4}$ | unmeasurable |
| Comp. 5 | 3 | $2.5 \times 10^{-4}$ | $2.1 \times 10^{-4}$ | unmeasurable |
| Comp. 6 | 0 | $5.5 \times 10^{-4}$ | $5.0 \times 10^{-4}$ | unmeasurable |
| Comp. 7 | no membrane formed | | | |
| Comp. 8 | no membrane formed | | | |
| Comp. 9 | no membrane formed | | | |
| Comp. 10 | 64 | $4.6 \times 10^{-4}$ | $2.3 \times 10^{-5}$ | 0.35 |

As for the results of the dissolution/precipitation test, it has been found that Examples each provide 200 cycles or more and stably achieve activation in the 200 cycles or more. In contrast, in Comparatives, the number of cycles is less than 200. In Comparatives, a voltage rose with an increase in the number of cycles and a stable activation failed.

As for the results of the ion conductivity, it has been found that Examples each exhibit an ion conductivity comparable to an ion conductivity resulting from soaking a separator with an electrolyte solution.

As for the results of the lithium ion transport number, it has been found that the respective lithium ion transport numbers of Examples all exceed 0.5. An electrolyte solution of an ionic liquid system usually tends to be low in lithium ion transport number. For instance, the lithium ion transport number of an electrolyte solution of an ionic liquid system is 0.5 or less. The lithium ion transport number of Comparative 10 was 0.35. Accordingly, it has been found that the solid electrolytes of Examples are advantageous.

From the foregoing, it has been found that the solid electrolyte membranes obtained in Examples are high in the properties in stability to the transport number of lithium ions, ion conductivity, and lithium metal as compared with the solid electrolyte membranes obtained in Comparatives. Therefore, it has been demonstrated that the solid electrolyte of the invention is excellent in these properties.

**Claims**

1. A solid electrolyte comprising:

   an electrolyte solution comprising a lithium salt and a carbonate solvent; and
   metal oxide particles, wherein
   the lithium salt is at least one selected from lithium-bis(fluorosulfonyl)imide and lithium borofluoride,
   the carbonate solvent is at least one selected from dimethyl carbonate and propylene carbonate,
   a molar ratio (lithium salt/carbonate solvent) of the lithium salt to the carbonate solvent is in a range from 1/4 to 1/1,
   a mass ratio (electrolyte solution/metal oxide particles) of the electrolyte solution to the metal oxide particles is in a range from 72/28 to 93/7, and
   a specific surface area of the metal oxide particles measured by a BET method is in a range from 160 m$^2$/g to 700 m$^2$/g.

2. The solid electrolyte according to claim 1, further comprising a binder.

3. The solid electrolyte according to claim 2, wherein the binder comprises a resin incompatible with the electrolyte solution.

4. The solid electrolyte according to claim 2 or 3, wherein the binder comprises polytetrafluoroethylene.

5. The solid electrolyte according to any one of claims 2 to 4, wherein a content of the binder is in a range from 3 parts by mass to 10 parts by mass with respect to 100 parts by mass of a total mass of the electrolyte solution and the metal oxide particles.

6. The solid electrolyte according to any one of claims 1 to 5, wherein the metal oxide particles comprise silica particles.

7. The solid electrolyte according to claim 6, wherein the silica particles comprise dry silica particles.

8. A battery comprising the solid electrolyte according to any one of claims 1 to 7.

## INTERNATIONAL SEARCH REPORT

| International application No. |
|---|
| **PCT/JP2022/015666** |

**A. CLASSIFICATION OF SUBJECT MATTER**

*H01B 1/06*(2006.01)i; *H01M 10/0565*(2010.01)i; *H01M 10/0567*(2010.01)i; *H01M 10/0568*(2010.01)i; *H01M 10/0569*(2010.01)i

FI: H01B1/06 A; H01M10/0565; H01M10/0568; H01M10/0569; H01M10/0567

According to International Patent Classification (IPC) or to both national classification and IPC

**B. FIELDS SEARCHED**

Minimum documentation searched (classification system followed by classification symbols)

H01B1/06; H01M10/0565; H01M10/0567; H01M10/0568; H01M10/0569

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 9-302134 A (ASAHI CHEM. IND. CO., LTD.) 25 November 1997 (1997-11-25) paragraphs [0033]-[0035] | 1-8 |
| A | JP 11-80296 A (MATSUSHITA ELECTRIC IND. CO., LTD.) 26 March 1999 (1999-03-26) paragraphs [0014]-[0015] | 1-8 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **03 June 2022** | **14 June 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2022/015666**

| Patent document cited in search report | | | Publication date (day/month/year) | Patent family member(s) | Publication date (day/month/year) |
|---|---|---|---|---|---|
| JP | 9-302134 | A | 25 November 1997 | (Family: none) | |
| JP | 11-80296 | A | 26 March 1999 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017059432 A